# FASCICULE DE BREVET EUROPEEN

(11) **EP 2 155 536 B1**
(45) Date de publication et mention de la délivrance du brevet: **26.12.2012**
(21) Numéro de dépôt: 08805925.8
(22) Date de dépôt: 03.06.2008
(51) Int. Cl.: B62D 25/20, B21D 53/88

(54) **PLATEFORME ARRIERE DE CHASSIS DE VEHICULE AUTOMOBILE ET PROCEDE DE REALISATION D'UNE TELLE PLATEFORME**
HINTERE PLATTFORM EINER AUTOMOBILKAROSSERIE UND VERFAHREN ZUR HERSTELLUNG DIESER PLATTFORM
REAR PLATFORM OF AN AUTOMOBILE FRAME AND METHOD FOR MAKING THAT PLATFORM

(30) Priorité: 06.06.2007 FR 0704045
(43) Date de publication de la demande: 24.02.2010
(73) Titulaire: Renault S.A.S., 92100 Boulogne-Billancourt (FR)
(72) Inventeur: ROUSSEAU, Olivier, F-91310 Linas (FR); HLUBINA, Thierry, F-92372 Chaville (FR)
(74) Mandataire: Rougemont, Bernard
(86) Numéro de dépôt international: PCT/FR2008/050982
(87) Numéro de publication internationale: WO 2009/001003

(56) Documents cités:
- EP-A- 1 559 637
- EP-A- 1 759 962
- JP-A- 2005 170 296

## Description

L'invention concerne un élément de châssis de véhicule automobile et plus exactement, une plateforme arrière de véhicule automobile, cette plateforme étant destinée à recevoir notamment les sièges arrière du véhicule automobile.

Les plateformes arrière constituent ou supportent les planchers arrière des véhicules. Ainsi, les sièges arrière d'un véhicule automobile sont fixés à l'avant d'une telle plateforme arrière et la partie arrière de la plateforme constitue ou supporte le plancher du coffre à bagages du véhicule automobile.

On connaît en particulier du document EP 1759 952 des véhicules automobiles de différents types qui comprennent des châssis de différents types et, en particulier, des plateformes arrière de différents types. Ainsi, des plateformes arrière d'un premier type équipent les véhicules monospaces dont les sièges arrière sont en général déplaçables longitudinalement, tandis que des plateformes arrière d'un deuxième type équipent les autres véhicules.

Les plateformes arrière du premier type se caractérisent dans leur partie avant, par une forme plane. Les plateformes arrière du deuxième type se caractérisent quant à elles, dans leur partie avant par une bosse anti-sous-marinage en arrière de laquelle est prévue une cuvette. Ce relief est prévu pour constituer un dispositif anti-sous-marinage en coopération avec les sièges arrière.

Les différentes formes des parties avant des plateformes arrière tiennent à la nature des sièges qu'elles sont destinées à recevoir.

En effet, les plateformes du premier type sont destinées à recevoir des sièges arrière de monospace : c'est-à-dire des sièges arrière amovibles et/ou déplaçables relativement à la plateforme. Par conséquent, de tels sièges intègrent un dispositif anti-sous-marinage et aucune bosse anti-sous-marinage n'est alors nécessaire sur la plateforme arrière. Ainsi, les plateformes du premier type présentent-elles une forme plane dans leur partie avant.

Parallèlement, les plateformes du deuxième type sont destinées à recevoir des sièges arrière fixes. De tels sièges n'intègrent pas nécessairement de dispositif anti-sous-marinage et cette fonction d'anti-sous-marinage est assurée par une bosse anti-sous-marinage prévue en avant de la plateforme et par une cuvette prévue pour recevoir une garniture de siège juste en arrière de la bosse. Ainsi, les plateformes du deuxième type présentent-elles une bosse et une cuvette dans leur partie avant.

Ces différences imposent aux constructeurs automobiles de réaliser des plateformes arrière différentes pour les différents types de véhicules. Ces plateformes étant généralement réalisées en tôle d'acier emboutie, il est nécessaire de prévoir différentes matrices d'emboutissage pour la réalisation des différentes plateformes. Ceci est générateur de coûts.

Afin de résoudre ce problème de coûts, il est possible d'utiliser des plateformes du deuxième type (c'est-à-dire avec bosse et cuvette) pour l'ensemble des types de véhicules. La solution consiste à ajouter au-dessus d'une plateforme du deuxième type un plancher plat. Ceci permet alors de fixer sur ce plancher au niveau de la bosse et de la cuvette un siège arrière amovible et/ou déplaçable.

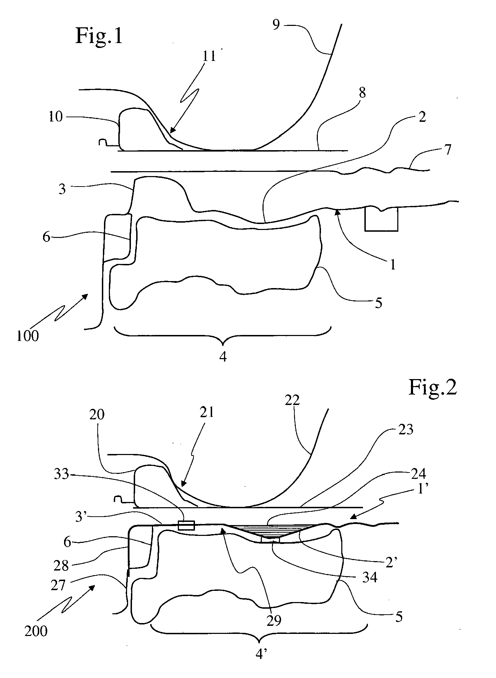

Une telle solution est décrite ci-après en référence à la figure 1. Un véhicule 100 est représenté partiellement selon une coupe longitudinale et verticale. Ce véhicule est du type monospace mais comprend dans sa partie arrière une plateforme arrière 1 du deuxième type réalisée en tôle emboutie. Cette plateforme présente dans sa partie avant une bosse 3 et une cuvette 2, ces deux formes étant réalisées par emboutissage de la tôle. Cependant, ces formes ne sont pas nécessaires et sont même gênantes sur un tel type de véhicule automobile équipé d'un siège arrière 11 déplaçable longitudinalement. Un tel siège est équipé d'un dispositif anti-sous-marinage. Compte tenu de la présence de la bosse et de la cuvette sur la plateforme arrière, le siège n'est pas fixé sur celle-ci mais sur un plancher plat 7 rapporté sur la plateforme arrière 1. Il est évident qu'une telle solution permet de réaliser une économie en utilisant la même plateforme arrière pour un grand nombre de véhicules automobiles. Cependant, elle présente aussi des problèmes. En effet, l'utilisation d'un plancher plat par-dessus la plateforme est génératrice de coûts d'autant que cette utilisation nécessite un certain nombre de pièces destinées à adapter le plancher sur la plateforme et à rigidifier ce plancher. En outre, l'utilisation d'une telle solution présente encore l'inconvénient d'alourdir sensiblement les véhicules qui en sont équipés.

Le but de l'invention est de fournit une plateforme arrière de châssis de véhicule automobile permettant d'obvier aux inconvénients décrits précédemment. En particulier, l'invention permet la réalisation indifférente de plateformes du premier type ou du deuxième type à des prix réduits, sans nuire à la masse du véhicule. Ainsi, la plateforme arrière selon l'invention peut être utilisé indifféremment pour la réalisation d'une plateforme du premier type ou d'une plateforme du deuxième type.

Selon l'invention, la plateforme arrière d'un châssis de véhicule automobile comprend les caractéristiques des revendications 1 et 2.

L'élément de plateforme arrière peut comprendre, au niveau de la forme plane, des moyens de fixation d'une bosse anti-sous-marinage.

L'élément de plateforme arrière peut comprendre, au niveau de la cuvette, des moyens de fixation d'une pièce remplissant la cuvette.

L'élément peut être réalisé par emboutissage d'un flanc de tôle.

Selon l'invention, le procédé de réalisation d'une plateforme arrière d'un châssis de véhicule automobile comprend les caractéristiques de la revendication 4.

Un véhicule automobile selon l'invention comprend une plateforme arrière définie précédemment.

Le dessin annexé représente, à titre d'exemple, un mode de réalisation d'un élément de plateforme de véhicule automobile selon l'invention.

La figure 1 est une vue en coupe longitudinale partielle d'une plateforme arrière de véhicule automobile, exécutée conformément aux enseignements de l'art antérieur.

La figure 2 est une vue en coupe longitudinale partielle d'une plateforme arrière de véhicule automobile selon l'invention, la plateforme arrière étant d'un premier type et comprenant un élément de plateforme selon l'invention.

La figure 3 est une vue en coupe longitudinale partielle d'une plateforme arrière de véhicule automobile selon l'invention, la plateforme arrière étant d'un deuxième type et comprenant un élément de plateforme selon l'invention.

Sur la figure 2, un véhicule 200 est représenté partiellement selon une coupe longitudinale et verticale. Ce véhicule est du type monospace et comprend dans sa partie arrière une plateforme arrière 29 du premier type réalisée à partir d'un élément de plateforme 1' selon l'invention. La plateforme arrière comprend dans sa partie avant 4' un renfort de pare-close 6 et surmonte le réservoir 5 de carburant du véhicule automobile. De plus, des sièges 21 sont fixés à la partie avant de la plateforme arrière. Ces sièges sont du type amovibles et/ou déplaçables longitudinalement. Pour ce faire, ils sont par exemple liés à la plateforme arrière grâce à une glissière 23. Ces sièges comprennent un dispositif anti-sous-marinage intégré : celui-ci comprend par exemple, dans sa structure, une bosse rigide 20 positionnée dans l'avant de l'assise du siège sous une garniture 22.

L'élément 1' de plateforme arrière utilisé pour réaliser cette plateforme arrière 29 est par exemple venu d'un flanc de tôle embouti. Cette tôle peut par exemple être une tôle d'acier. Cet élément est sensiblement plat sur son étendue à l'exception de sa périphérie où il présente des formes lui permettant de le lier au châssis ou à la caisse du véhicule automobile. Ainsi, dans sa partie avant, cet élément présente un angle 28 lui permettant d'être relié à un autre élément 27 du châssis du véhicule. Malgré sa géométrie sensiblement plane, cet élément présente tout de même dans sa partie avant, une cuvette 2' reliée à l'angle 28 par une partie plane 3'. Cette cuvette et cette partie plane sont localisées dans la partie avant 4' destinée à recevoir des sièges arrière. L'élément comprend un premier moyen de fixation 33 au niveau de cette partie plane et un deuxième moyen de fixation 34 au niveau de cette cuvette. Ces moyens de fixations peuvent simplement consister en des trous constituant des passages pour des vis de fixation de différents moyens. Ils peuvent aussi comprendre tout autre moyen. Sur la plateforme arrière représentée à la figure 2, une pièce 24 est rapportée dans la cuvette 2' afin de combler la dépression créée par celle-ci dans la plateforme arrière. Cela permet d'obtenir une plateforme arrière plane notamment dans sa partie avant où l'on souhaite fixer des glissières de sièges arrière. La pièce 24 rapportée dans la cuvette peut par exemple être réalisée en matériau composite. Elle peut être rapportée sur l'élément de plateforme par simple vissage.

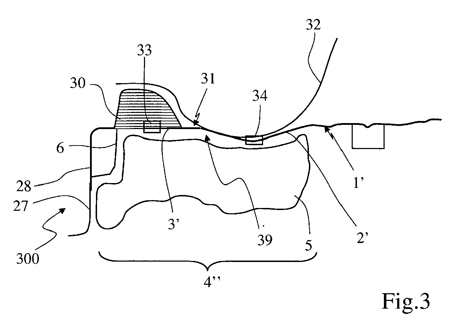

Sur la figure 3, un véhicule 300 est représenté partiellement selon une coupe longitudinale et verticale. Ce véhicule n'est pas du type monospace et comprend dans sa partie arrière une plateforme arrière 29 du deuxième type réalisée à partir d'un élément de plateforme 1' selon l'invention, cet élément de plateforme étant identique à celui décrit précédemment. La plateforme arrière comprend dans sa partie avant 4" un renfort de pare-close 6 et surmonte le réservoir 5 de carburant du véhicule automobile. De plus, des sièges 31 sont fixés à la partie avant de la plateforme arrière. Ces sièges sont du type non déplaçables. Ils sont directement liés à la plateforme arrière et ne comprennent pas de dispositif anti-sous-marinage intégré.

Sur la plateforme arrière représentée à la figure 3, aucune pièce 24 n'est rapportée dans la cuvette 2'. Cependant, une bosse anti-sous-marinage 30 est rapportée sur la partie plane 3'. Elle peut être rapportée sur l'élément de plateforme en utilisant le premier moyen de fixation 33 précédemment décrit. Elle peut notamment être fixée par simple vissage. Cette bosse peut par exemple être réalisée en matériau composite.

Avec une telle plateforme, il est possible de rapporter des garnitures 32 de sièges fixes sur le relief constitué par la bosse anti-sous marinage et la cuvette. Ce relief présente une fonction anti-sous-marinage qui ne doit donc pas nécessairement être assurée par la structure de siège.

Comme vu précédemment, un même élément 1' de plateforme peut être utilisé pour réaliser des plateformes d'un premier type ou d'un deuxième suivant avec quelle autre pièce on l'assemble. Ceci permet à l'évidence de limiter les coûts de production des plateformes.

## Revendications

1. Plateforme arrière d'un châssis de véhicule automobile comprenant un élément (1') qui présente, dans sa partie avant (4'), une cuvette (2'), **caractérisé en ce que** ledit élément (1') comprend, en avant de ladite cuvette (2'), _une forme plane (3'), et **en ce qu'**il est prévu une bosse anti-sous-marinage (30) rapportée et fixée sur ladite forme plane (3')

2. Plateforme arrière d'un châssis de véhicule automobile comprenant un élément (1') qui présente, dans sa partie avant (4'), une cuvette (2'), **caractérisé en ce que** ledit élément (1') comprend, en avant de ladite cuvette (2'), une forme plane (3'), et **en ce qu'**il est prévu une pièce (24) rapportée et fixée dans la cuvette pour la remplir.

3. plateforme arrière selon l'une des revendications précédentes, **caractérisé en ce que** ledit élément (1') est réalisé par emboutissage d'un flanc de tôle.

4. Procédé de réalisation d'une plateforme arrière d'un châssis de véhicule automobile selon l'une des revendications précédentes, comprenant les étapes suivantes :
- fournir un élément (1') de plateforme
- rapporter sur cet élément, une pièce (24) remplissant la cuvette ou une bosse anti-sous-marinage (30) selon que l'on veut réaliser une plateforme arrière d'un premier type ou d'un deuxième type.

5. Véhicule automobile (200 ; 300) comprenant une plateforme arrière selon l'une des revendications 1 à 3.

## Claims

1. Rear platform of a motor vehicle chassis comprising an element (1') which, in its front part (4'), has a cup (2'), **characterized in that** the said element (1') comprises, in front of the said cup (2'), a flat shape (3'), and **in that** an attached anti-submarining bump (30) is provided, fixed to the said flat shape (3').

2. Rear platform of a motor vehicle chassis comprising an element (1') which, in its front part (4'), has a cup (2'), **characterized in that** the said element (1') comprises, in front of the said cup (2'), a flat shape (3'), and **in that** an attached part (24) is provided and fixed into the cup in order to fill it.

3. Rear platform according to one of the preceding claims, **characterized in that** the said element (1') is produced by pressing a sheet metal blank.

4. Method of producing a rear platform of a motor vehicle chassis according to one of the preceding claims, comprising the following steps:
- supplying a platform element (1'),
- attaching to this element a piece (24) that fills the cup or an anti-submarining bump (30) according to whether the intention is to create a rear platform of a first type or one of the second type.

5. Motor vehicle (200; 300) comprising a rear platform according to one of Claims 1 to 3.

## Patentansprüche

1. Hintere Plattform einer Automobilkarosserie, die ein Element (1') aufweist, das in seinem vorderen Teil (4') eine Schale (2') aufweist, **dadurch gekennzeichnet, dass** das Element (1') vor der Schale (2') eine flache Form (3') aufweist, und dass ein Antisubmarine-Höcker (30) vorgesehen ist, der an der flachen Form (3') angefügt und befestigt ist.

2. Hintere Plattform einer Automobilkarosserie, die ein Element (1') aufweist, das in seinem vorderen Teil (4') eine Schale (2') aufweist, **dadurch gekennzeichnet, dass** das Element (1') vor der Schale (2') eine ebene Form (3') aufweist, und dass ein Teil (24) vorgesehen ist, der in der Schale angefügt und befestigt ist, um sie zu füllen.

3. Hintere Plattform nach einem der vorhergehenden Ansprüche, **dadurch gekennzeichnet, dass** das Element (1') durch Stanzen einer Blechflanke hergestellt wird.

4. Verfahren zum Herstellen einer hinteren Plattform einer Automobilkarosserie nach einem der vorhergehenden Ansprüche, das die folgenden Schritte aufweist:
- Bereitstellen eines Plattformelements (1'),
- Anfügen auf dieses Element eines Teils (24), der die Schale füllt, oder eines Antisubmarine-Höckers (30), je nachdem, ob man eine hintere Plattform eines ersten Typs oder eines zweiten Typs herstellen will.

5. Kraftfahrzeug (200; 300), das eine hintere Plattform nach einem der Ansprüche 1 bis 3 aufweist.
